# EUROPÄISCHE PATENTSCHRIFT

(11) **EP 1 927 412 B1**
(45) Veröffentlichungstag und Bekanntmachung des Hinweises auf die Patenterteilung: **16.07.2008**
(21) Anmeldenummer: 06024858.0
(22) Anmeldetag: 30.11.2006
(51) Int. Cl.: B21D 43/00, B21F 23/00, B65G 47/14

(54) **Verfahren und Vorrichtung zum Vereinzeln stangenförmiger Körper**
Method and device for separating bar-shaped elments
Procédé et dispositif pour séparer des éléments en forme de barre

(43) Veröffentlichungstag der Anmeldung: 04.06.2008
(73) Patentinhaber: WAFIOS Aktiengesellschaft, 72764 Reutlingen/Württ. (DE)
(72) Erfinder: Veit, Gustav, 72766 Reutlingen/Sondelfingen (DE); Hammerer, Peter, 87541 Bad Hindelang (DE)
(74) Vertreter: Geyer, Fehners & Partner

(56) Entgegenhaltungen:
- EP-B- 0 790 086
- DD-A1- 229 974
- DE-A1- 3 630 726
- FR-A1- 2 526 769

## Beschreibung

Die Erfindung bezieht sich auf ein Verfahren und auf eine Vorrichtung zum Vereinzeln stangenförmiger Körper aus einem Bündel solcher Körper.

Häufig ist es erforderlich, stangenförmige Körper, wie Abschnitte von Drähten, Rohren, Schläuchen o.ä., die in Form von zwar grob orientierten, aber ansonsten ungeordneten, wirren Bündeln angeliefert werden, vor einer weiteren Bearbeitung aus den angelieferten Bündeln zu vereinzeln und sie in einer geordneten Lage abzulegen und zu puffern, bevor sie dann einer weiteren Bearbeitung, wie etwa einem Montieren, Veredeln, Biegen o.ä., unterzogen werden.

Aus der DE 4137518 C2 ist eine Anordnung zum Vereinzeln stangenförmiger Körper bekannt, bei der das Bündel der Körper in eine durch ein Endlos-Förderband gebildete Mulde eingebracht, dort durch die Bewegung des Bandes entwirrt, die Körper über Vertiefungen im Band vereinzelt und aus der Mulde zu einer Abnahmestation befördert werden. Nachteilig hierbei ist allerdings, daß nur ein sehr begrenzt großes Bündel an Körpern in der Mulde aufgenommen werden kann, wobei nach erfolgter Vereinzelung der Körper eines Bündels ein Nachfüllen vorgenommen werden muß.

Bei der aus der DE 4336753 C2 bekannten Vereinzelungsanordnung für lange, dünne Rohre wird ein Rohrbündel auf einen unterteilten Tisch aufgebracht, der Vertiefungen zur Aufnahme einzelner Rohre aufweist. Durch manuelles Verschieben der Rohre auf dem Tisch werden die Rohre in die Vertiefungen befördert und können, so ausgerichtet, in ein Magazin befördert und dort als Vorrat für eine Bearbeitungsmaschine aufgenommen werden. Das manuelle Einbringen der Rohre in die Aufnahmenuten des Aufnahmetisches erweist jedoch als sehr nachteilig.

Aus der DE 100 16 036 C2 ist ein Treppenförderer für stabförmige Körper bekannt, der Treppenelemente aufweist, die relativ zueinander zur Beförderung der Werkstücke zyklisch verschiebbar oder rotierbar gelagert sind und durch ihr Zusammenwirken die Werkstücke stufenartig befördern. Die Anwendung dieser Technik setzt jedoch voraus, daß die zu befördernden länglichen Körper keine flexiblen Abschnitte aufweisen und auch nicht vormontiert sind, weil in diesen Fällen diese bekannte Anordnung ungeeignet ist.

Derselbe Nachteile gilt auch für den Stand der Technik aus der EP 1 230 047 B1, bei der Drähte aus einem ungeordneten Bündel über mehrere hintereinander angeordnete Auskämmräder vereinzelt werden.

Die EP 0 790 086 B1 beschreibt ein Verfahren und eine Vorrichtung zur Vereinzelung und Weiterbearbeitung von Metallstäben aus einem Bündel, wobei ein Ende des Bündels angehoben wird, so daß mehrere Stäbe mit einem magnetischen Haltemittel in Eingriff kommen. Über eine geeignete Meßeinrichtung kann deren Lage ermittelt und ein günstig liegender Metallstab von einem Greifer erfaßt werden, der ihn in Längsrichtung aus dem Bündel herauszieht und auf einem Ablagetisch ablegt. Das Bündel muß hier allerdings beim Anheben seitlich geführt werden, um ein Herabfallen der Metallstäbe zu vermeiden. Zudem ist auch kein Pufferbereich zwischen einer nachgeschalteten Bearbeitungsmaschine und der Vereinzelungsvorrichtung vorgesehen.

Aus der EP 1 415 939 B1 und der DE 699 22 469 T2 ist eine Vereinzelungsanordnung bekannt, bei der ein Endteil eines Bündels von Stangen durch scherenartige Greifer erfaßt und angehoben wird, wobei die Greifer bei ihrer Schließbewegung erreichen, daß letztlich nur noch eine Stange zwischen ihnen erfaßt bleibt. Diese vereinzelte Stange wird über eine schiefe Ebene, die unterhalb ihr entlang läuft, abgelegt und über ihre ganze Länge vereinzelt. Hierbei ist jedoch von Nachteil, daß die Fixierung im Greifer bei stärkeren Axialkräften möglicherweise nicht ausreichend ist, und zudem dürfen die aufgenommenen Stangen im Greifbereich auch nicht mit Muttern o.ä. versehen sein.

Ausgehend hiervon liegt der Erfindung die Aufgabe zugrunde, ein Verfahren und eine Vorrichtung zum Vereinzeln länglicher Körper aus einem Bündel solcher Körper vorzuschlagen, wobei keine manuellen Eingriffe erforderlich sind, die zu vereinzelnden Körper auch mit flexiblen Abschnitten versehen oder vorkonfektioniert sein und zudem auch stangenförmige Körper größerer Längen (etwa für Längen ab 1,50 m) ohne Schwierigkeit behandelt werden können. Ferner soll eine besonders große Flexibilität hinsichtlich der zu vereinzelnden stangenförmigen Körper sichergestellt sein.

Erfindungsgemäß wird diese Aufgabe durch ein Verfahren zum Vereinzeln stangenförmiger Körper aus einem Bündel solcher in einer Transportvorrichtung angelieferter und quer zu dieser liegender Körper gelöst, bei dem mittels einer Sensoreinrichtung die vertikale Lage eines Detektionsbereiches an der Oberfläche eines im Bündel oben liegenden Abschnitts eines Körpers an einem seitlichen Endbereich desselben festgestellt, sodann an einer dem Detektionsbereich (senkrecht zur Transportrichtung gesehen) seitlich benachbarten Aufnahmestelle der Körper mit einer ersten Greifeinrichtung erfaßt, um eine vorgegebene Strecke vertikal angehoben und hiernach mittels einer weiteren Greifeinrichtung an einer Stelle, die von der Aufnahmestelle (senkrecht zur Transportrichtung gesehen) in Richtung zum anderen Endbereich des Körpers hin um eine vorgegebene Strecke versetzt liegt, ergriffen wird, wonach die weitere Greifeinrichtung relativ zum untergriffenen Körper bis zu dessen anderem Endbereich hin verfahren, dabei der Körper über seine Länge hinweg aus dem Bündel herausgehoben und durch die weitere Greifeinrichtung während oder nach deren Verfahren auf eine Höhenlage gebracht wird, die mindestens einer vorgegebenen Mindesthöhe entspricht, wobei die vertikalen Mittelachsen der Sensoreinrichtung und beider Greifeinrichtungen in einer gemeinsamen, senkrecht zur Transportrichtung quer verlaufenden Vertikalebene liegen, und anschließend der aufgenommene Körper von beiden Greifeinrichtungen zu einer Ablagestelle verbracht oder in einer Halteposition zur Abnahme durch andere Einrichtungen gehalten wird.

Bei dem erfindungsgemäßen Verfahren wird dadurch, daß der aufzunehmende stangenförmige Körper an einem Endbereich zunächst von der ersten Greifeinrichtung erfaßt und vertikal über das Bündel hinaus angehoben wird, in einfacher Weise die Möglichkeit geschaffen, in dem vertikal angehobenen, sich über die Bündeloberfläche hinaus erstreckenden Abschnitt des stangenförmigen Körpers diesen dort in einem vorgegebenen Abstand zum Angriffspunkt der ersten Greifeinrichtung mittels der weiteren Greifeinrichtung unschwer untergreifen zu können. Dadurch, daß die zweite Greifeinrichtung den aufzunehmenden Körper - anders als die erste Greifeinrichtung - nur untergreift und ihn dabei nicht festhält, sondern anschließend relativ zum Körper entlang diesem zu seinem anderen Endbereich hin verfahren wird, wird, da die weitere Greifeinrichtung dabei nicht abgesenkt wird, der Körper entlang seiner Länge zunehmend aus dem Bündel nach oben herausgehoben. Die weitere Greifeinrichtung wird dabei, entweder während ihres Verfahrens oder nach dessen Ende, auf eine vorgegebene Mindesthöhe (oder höher) angehoben, die sicherstellt, daß die erfaßte Stelle des Körpers sicher oberhalb des Körperbündels liegt, aus dem er separiert werden soll. Bevorzugt wird dabei der erfaßte Körper auf gleiche Höhe wie an der ersten Greifeinrichtung, an welcher er festgehalten ist, gebracht. Dabei wird der Körper an der ersten Greifeinrichtung zwar festgehalten, dies aber derart, daß er beim Verfahren der weiteren Greifeinrichtung die durch deren Verfahrbewegung erzwungene Verschwenkbewegung nach oben hin durchführen kann. Dadurch, daß die vertikalen Mittelachsen der Sensoreinrichtung und der Greifeinrichtungen gemeinsam in einer senkrecht zur Transportrichtung quer verlaufenden Vertikalebene liegen, wird sichergestellt, daß der aus dem Bündel vereinzelte stangenförmige Körper dann auch bereits in einer senkrecht zur Transportrichtung liegenden Ausrichtung von den Greifeinrichtungen gehalten wird, in der er anschließend zu einer Ablagestelle verbracht und dort ausgerichtet abgesetzt oder in einer Halteposition zur Abgabe an irgendeine andere Einrichtung gehalten wird.

Das erfindungsgemäße Verfahren gestattet die Vereinzelung einer Vielzahl unterschiedlicher stangenförmiger Körper, wie etwa von Abschnitten von Drähten, Stangen, Rohren, Schläuchen, Wellen, o.ä. wodurch sich eine besonders breites und flexibles Anwendungsgebiet ergibt. Dabei lassen sich auch vorkonfektionierte Körper, etwa mit zusätzlichen Elementen wie z.B. Überwurfmuttern oder Körper mit flexiblen Köperabschnitten, vereinzeln, was zu einer weiteren Vergrößerung des Einsatzbereiches des erfindungsgemäßen Verfahrens beiträgt. Überdies ist die Durchführung des erfindungsgemäßen Verfahrens relativ einfach, erfordert keinerlei manuelle Eingriffe und gestattet ein zuverlässiges und relativ rasches Vereinzeln der Körper aus dem Bündel.

Besonders günstige Verhältnisse ergeben sich beim erfindungsgemäßen Verfahren dann, wenn der von der Sensoreinrichtung erfaßte Detektionsbereich des aufzunehmenden Körpers relativ zur Aufnahmestelle, an welcher die erste Greifeinrichtung angreift, auf deren dem anderen Endbereich zugewandten Seite liegt. Dadurch wird erreicht, daß die Aufnahmestelle des Körpers an dem seitlichen Endbereich desselben, an dem die Sensoreinrichtung detektiert, besonders nahe am dortigen Körperende liegen kann.

Besonders günstig ist es ferner, wenn der Körper von der weiteren Greifeinrichtung unmittelbar neben dem Detektionsbereich untergriffen wird, wobei - erneut bevorzugt - der Detektionsbereich seinerseits unmittelbar neben der Aufnahmestelle, an welcher die erste Greifeinrichtung den Körper erfaßt, vorgesehen ist. Hierdurch ergeben sich insgesamt sehr günstige geometrische Verhältnisse einerseits für die Aufnahme des einen Endbereiches des Körpers durch die erste Greifeinrichtung und andererseits beim Untergreifen des Körpers durch die weitere Greifeinrichtung, die dabei zwar in der Nähe der Aufnahmestelle, nicht jedoch unmittelbar neben dieser liegt, so daß gerade im anfänglichen Bereich des seitlichen Verfahrens der weiteren Greifeinrichtung zum Anheben des Körpers der Hebelarm zwischen der Stelle, wo der Körper von dieser untergriffen wird, zu der Stelle, an welcher er von der ersten Greifeinrichtung gehalten wird, nicht zu klein wird, was für die auftretenden Verfahrkräfte an der weiteren Greifeinrichtung ungünstiger wäre.

Besonders günstig ist es, wenn bei dem erfindungsgemäßen Verfahren die weitere Greifeinrichtung nach dem Untergreifen des Körpers bereits während ihres Verfahrens zum anderen Endbereich hin kontinuierlich so angehoben wird, daß sie den Körper am Ende des Verfahrweges bereits auf dieselbe Höhenlage gebracht hat, in der er durch die erste Greifeinrichtung gehalten wird. Hierdurch lassen sich die Schritte des seitlichen Verfahrens der weiteren Greifeinrichtung und die des kontinuierlichen Anhebens des Körpers durch diese zeitlich kombinieren, wodurch das Verfahren eine besonders rasche Vereinzelung ermöglicht.

Für die Fälle, bei denen beim Verfahren der weiteren Greifeinrichtung ein relativ großer Verfahrwiderstand auftritt, etwa weil der anzuhebende Körper in dem Bündel partiell vom anderen Körper überlagert oder eingeklemmt ist, ist es besonders vorteilhaft, wenn bei Überschreiten einer vorgegebenen Größe des Verfahrwiderstandes die Verfahrbewegung der weiteren Greifeinrichtung gestoppt wird, die weitere Greifeinrichtung sodann um eine bestimmte Strecke in Gegenrichtung zurückgefahren und anschließend erneut wieder in die anfängliche Fahrtrichtung bewegt wird, wobei die Abfolge dieser Schritte gegebenenfalls auch mehrfach durchgeführt werden kann, um dadurch ein besseres Lösen des anzuhebenden Körpers durch die weitere Greifeinrichtung zu bewirken. Dabei kann es sich allerdings als ganz besonders zweckmäßig erweisen, wenn während des Zurückfahrens der weiteren Greifeinrichtung und des anschließenden Verfahrens derselben in die anfängliche Fahrtrichtung das Bündel der länglichen Körper in geeigneter Weise auch noch einem Rüttelvorgang unterzogen wird, um auch hierbei ein für das Anheben des ergriffenen Körpers günstiges Entwirren der möglicherweise stark wirr angeordneten Körper des Bündels zu begünstigen. Gleichermaßen ist es auch möglich, zum Entwirren das Bündel auch nur einem Rüttelvorgang zu unterziehen und auf ein Zurückfahren der weiteren Greifeinrichtung zu verzichten.

Sollten jedoch alle diese Maßnahmen, auch bei wiederholter Ausführung, noch immer nicht zu dem gewünschten Erfolg führen, kann die eingesetzte Programmsteuerung so ausgelegt sein, daß sie dann den aufgenommenen Körper durch beide Greifeinrichtungen wieder freigibt, die Greifeinrichtungen in ihre Ausgangsposition zurückgefahren werden und dann das Verfahren noch einmal mit dem erneuten Detektieren eines im Bündel oben liegenden Körpers usw. von vorne begonnen und durchgeführt wird.

In einer besonders bevorzugten Ausgestaltung des erfindungsgemäßen Verfahrens wird für die Sensoreinrichtung ein Näherungssensor eingesetzt, welcher den Abstand zur Oberfläche eines im Bereich seiner vertikalen Mittelachse unter ihm liegenden Oberflächenbereiches eines dort vorhandenen länglichen Körpers mißt, wobei die Sensoreinrichtung dabei vertikal von oben in Richtung auf das darunterliegende Bündel länglicher Körper abgesenkt wird, bis sie dort zu einer Anlage kommt, und für den Fall, daß der dann gemessene Wert des Abstandes größer als ein vorgegebener Minimalwert ist, die Sensoreinrichtung in Transportrichtung über die Oberfläche des Bündels relativ zu dieser bis zu einer Stelle bewegt wird, an welcher der gemessene Abstand den vorgegebenen Minimalwert hat. Da der eingesetzte Sensor der Sensoreinrichtung nur unter seiner vertikalen Mittelachse die Entfernung zur Oberfläche eines darunter liegenden länglichen Körpers mißt, sich jedoch seitlich zu der Mittelachse noch erstreckt, bedeutet dies, daß nur dann, wenn der gemessene Abstandswert dem vorgegebenen Minimalwert entspricht, der Sensor der Sensoreinrichtung auch ganz oben auf dem von ihm kontaktierten länglichen Körper sitzt. Denn ist er nur etwas seitlich zu dem obersten Punkt des Körpers versetzt, würde der Sensor mit seinem seitlich über die Mittelachse überstehenden Bereich zur Anlage kommen, wobei in diesem Fall unterhalb der Mittelachse dann noch ein Abstandswert größer als der vorgegebene Minimalwert vorläge.

Die weiter oben genannte Aufgabe, die der Erfindung zugrunde liegt, wird vorrichtungstechnisch gelöst durch eine Vorrichtung zum Vereinzeln stangenförmiger Körper aus einem Bündel solcher Körper, wie sie insbesondere zur Durchführung des erfindungsgemäßen Verfahrens einsetzbar ist, mit einer Zuführeinrichtung zum Anliefern der Bündel der stangenförmigen Körper entlang einer Transportrichtung, mit einer der Zuführeinrichtung zugeordneten Vereinzelungseinrichtung, welche ein Portal mit einer senkrecht zur Transportrichtung horizontal verlaufenden Portalführung umfaßt, an der, längs derselben sowie vertikal zu dieser verfahrbar, eine erste Greifeinrichtung zum Erfassen eines stangenförmigen Körpers, dieser benachbart eine Sensoreinrichtung, die zur Abgabe eines vom vertikalen Abstand zwischen ihr und einem unter ihr liegenden Oberflächenabschnitt eines länglichen Körpers abhängigen Sensorsignals eingerichtet ist, sowie eine entlang der Portalführung und senkrecht zu dieser verfahrbare weitere Greifeinrichtung angebracht sind, wobei letztere zum Untergreifen eines unter ihr liegenden länglichen Körpers eingerichtet ist und ferner die Sensoreinrichtung und alle Greifeinrichtungen auch noch in Transportrichtung verfahrbar sind, und ferner noch mit einer mit dem von der Sensoreinrichtung gelieferten Sensorsignal beaufschlagten Steuerungseinrichtung, mittels derer alle Bewegungs- und Betätigungsvorgänge aller beweglichen Einrichtungen der erfindungsgemäßen Vorrichtung programmsteuerbar sind.

Für die erfindungsgemäße Vorrichtung treffen die weiter oben in Verbindung mit dem erfindungsgemäßen Verfahren geschilderten Vorteile gleichermaßen zu, insbesondere aber die große Flexibilität beim Einsatz für unterschiedlichste stangenförmige Körper. Dabei läßt sich die erfindungsgemäße Vorrichtung insbesondere in Verbindung mit einer Bearbeitungsvorrichtung zum z.B. Umformen oder Biegen von Rohren, Leitungen, Stäben, vorkonfektionierten Leitungen usw. einsetzen, aber auch als Teil einer Zuführanlage für sonstige Vorrichtungen, mit denen solche stangenförmigen Körper nachgeschaltet montiert, verpackt, magaziniert, gezählt o.ä. werden sollen und dazu vereinzelt bzw. in geordneter Lage gepuffert werden müssen.

Zum Verfahren der Sensoreinrichtung sowie der Greifeinrichtungen in Transportrichtung wird ganz besonders bevorzugt das Portal als in dieser Richtung verfahrbar ausgebildet. Es sind jedoch auch Fälle denkbar, in denen das Portal feststeht und jeder dieser Einrichtungen eine eigene Einrichtung zum Verfahren in Transportrichtung zugeordnet ist.

Bevorzugt umfaßt bei einer erfindungsgemäßen Vorrichtung die Zuführeinrichtung an ihren beiden Längsseiten zwei parallel zur Transportrichtung verlaufende Endlos-Transportbänder, die auf ihren nach außen weisenden Oberflächen mit senkrecht zu diesen und zur Transportrichtung vorstehenden plattenartigen Elementen versehen sind, welche, in Transportrichtung gesehen, in Abständen voneinander angeordnet sind, wobei zwischen jeweils zwei aufeinanderfolgenden plattenförmigen Elementen ein Aufnahmeraum für die seitlichen Endbereiche auf einer Seite der länglichen Körper eines Bündels ausgebildet wird. Durch diese beiden Endlos-Transportbänder werden dann die Bündel der länglichen Körper an beiden seitlichen Endbereichen jeweils zwischen zwei in Transportrichtung aufeinanderfolgenden plattenartigen Elementen auf den Endlos-Transportbändern gehaltert und der Vereinzelungseinrichtung so in Transportrichtung zugeführt.

Besonders vorteilhafterweise ist bei der erfindungsgemäßen Vorrichtung eine der Zuführeinrichtung und der Vereinzelungseinrichtung (bevorzugt in Transportrichtung) nachgeschaltete Abführeinrichtung vorgesehen, an die der von den Greifeinrichtungen angehobene Körper abgegeben, bevorzugt dort abgelegt, und gepuffert werden kann.

Dabei ist besonders bevorzugt die Abführeinrichtung als ein Gestell mit einer schiefen, in Transportrichtung geneigten Ebene ausgebildet, auf der die abgelegten Körper in Reihe hintereinander und gegen einen Endanschlag anliegend gepuffert werden. Bevorzugt ist die Abführeinrichtung auch noch mit einer Anordnung zum seitlichen Ausrichtung der Enden der abgelegten länglichen Körper versehen.

Auf diese Weise können die abgelegten stangenförmigen Körper in relativ einfacher Weise genau ausgerichtet gepuffert werden.

Eine weitere vorzugsweise Ausgestaltung der erfindungsgemäßen Vorrichtung besteht auch darin, daß der Abführeinrichtung eine Einrichtung zugeordnet ist, mittels derer die in der Abführeinrichtung gepufferten stangenförmigen Körper in dieser erfaßt und aus ihr an eine weiter nachgeschaltete Transport- oder Bearbeitungsstation übergeben werden können.

Bei der erfindungsgemäßen Vorrichtung kann die Sensoreinrichtung in jeder geeigneten Art und Weise ausgebildet werden. Besonders bevorzugt umfaßt sie jedoch einen Näherungssensor, mit dem der Abstand zur Oberfläche eines im Bereich seiner vertikalen Mittelachse unter ihm liegenden Oberflächenbereiches eines aufzunehmenden stangenförmigen Körpers gemessen werden kann.

Vorteilhafterweise ist bei der erfindungsgemäßen Vorrichtung die Sensoreinrichtung mit einer konvex in Transportrichtung gekrümmten, an ihrer Vorderseite nach oben verlaufenden Führungsrampe, etwa in Form eines gebogenen Blechbandes, versehen, mittels derer sie bei einer Bewegung relativ zum Bündel länglicher Körper stoßfrei über letztere auf deren Oberseite verfahrbar ist. Dadurch kann besonders einfach sichergestellt werden, daß die Sensoreinrichtung auf der Oberseite des Bündels der stangenförmigen Körper so in Transportrichtung relativ zu diesem verfahren werden kann, bis sie einen ganz oben liegenden Abschnitt eines solchen aufzunehmenden Körpers detektiert.

Es besteht grundsätzlich die Möglichkeit, die Sensoreinrichtung unabhängig von der ersten und der zweiten Greifeinrichtung an der Portalführung des Portales anzubringen und zu betätigen. Besonders bevorzugt wird jedoch die Sensoreinrichtung an einem Haltegestell der ersten Greifeinrichtung gehaltert, wodurch sie mit dieser gemeinsam absenkbar ist. Vorteilhafterweise wird die Sensoreinrichtung dabei in einem von diesem Haltegestell senkrecht und quer zur Transportrichtung vorstehenden Halteflansch desselben vertikal verschieblich gelagert, wobei ein die Bewegung der Sensoreinrichtung vertikal nach unten begrenzender Anschlag vorgesehen ist. Damit besteht die Möglichkeit, durch Absenken der ersten Greifeinrichtung auch die Sensoreinrichtung bis zum Kontakt mit der Oberfläche des darunter angeordneten Bündels stangenförmiger Körper abzusenken und die Absenkbewegung der ersten Greifeinrichtung noch etwas über diesen Punkt hinauslaufen zu lassen, damit sich bei der anschließenden Bewegung in Transportrichtung die Sensoreinrichtung über die Oberfläche des Bündels hinweg ohne weitere Veränderung der Absenkstellung der ersten Greifeinrichtung infolge ihrer verschieblichen Lagerung in letzterer entsprechend der Oberfläche des Bündels unabhängig von der ersten Greifeinrichtung relativ zu dieser nach oben und unten bewegen kann.

Dabei ist es besonders bevorzugt, wenn die Sensoreinrichtung seitlich unmittelbar neben der ersten Greifeinrichtung liegt, wodurch erreicht werden kann, daß die Aufnahmestelle des betreffenden Körpers, an welcher er von der ersten Greifeinrichtung erfaßt wird, in einer Höhenlage ähnlich der der Sensoreinrichtung liegt und damit ein durch eine Schrägstellung des zu ergreifenden Körpers zwischen Detektionsbereich und Aufnahmestelle auftretender Niveauversatz, der im Falle eines etwas größeren Abstands zwischen beiden bei der Ansteuerung der ersten Greifeinrichtung berücksichtigt werden müßte, vernachlässigbar ist.

Die erste Greifeinrichtung selbst kann in jeder geeigneten Art und Weise ausgebildet sein, die das Ergreifen des Körpers gestattet. Besonders bevorzugt weist die erste Greifeinrichtung jedoch zwei Greifbacken zum Erfassen des stangenförmigen Körpers zwischen ihnen auf. Dabei sind, erneut bevorzugt, beide Greifbacken auf ihren einander abgewandten Seiten mit schrägen Außenflächen versehen, die in Richtung nach unten, d.h. zum freien Ende des betreffenden Greifbackens hin, zueinander konvergieren. Infolge der dadurch erreichten Keilform können beim Absenken der Greifbacken benachbarte Werkstücke beim Anfahren der Aufnahmestelle beiseitegeschoben werden.

Bei der erfindungsgemäßen Vorrichtung ist es ferner vorteilhaft, wenn auch die weitere Greifeinrichtung zwei verschwenkbare Arme aufweist, die an ihren freien Enden aufeinander zu gerichtete, in geschlossenem Zustand der weiteren Greifeinrichtung mit ihren Endflächen gegeneinander anliegende Führungsstege zum Untergreifen des aufzunehmenden länglichen Körpers aufweisen. Um beim Verfahren der weiteren Greifeinrichtung relativ zum unterfaßten Körper an der Reibfläche zwischen den Führungsstegen und diesem möglichst verschleißfrei arbeiten zu können, wird besonders vorteilhafterweise jeder der beiden Führungsstege zumindest an seinem oberen Flächenbereich, innerhalb dessen er gegen den länglichen Körper anliegt, mit einer geeigneten Verschleißschutzschicht versehen, wobei hier insbesondere Verschleißschutzschichten in Form geeigneter Kunststoffbeflockungen oder Kunststoffummantelungen eingesetzt werden.

Zum Vereinzeln von besonders langen und/oder dünnen Körpern mit flexiblen Abschnitten ist es weiter vorteilhaft, an der Portalführung eine senkrecht zu und entlang dieser verfahrbare dritte Greifeinrichtung vorzusehen, die ebenfalls zum Untergreifen des länglichen Körpers eingerichtet und besonders bevorzugt zwischen der ersten Greifeinrichtung und der weiteren Greifeinrichtung angeordnet ist.

In bestimmten Fällen kann es auch vorteilhaft sein, wenn bei einer erfindungsgemäßen Vorrichtung eine zweite Sensoreinrichtung vorgesehen wird, mittels derer bei starker Schräglage der länglichen Körper deren Achslage ermittelt werden und damit ein sicheres, gesteuertes Ergreifen durch die erste Greifeinrichtung stattfinden kann.

Mit dem Einsatz der erfindungsgemäßen Vereinzelungsvorrichtung kann ein wirres Bündel schlanker, länglicher Körper einfach und relative rasch vereinzelt und, falls gewünscht, können diese in geordneter Lage gepuffert werden.

Die Erfindung wird nachfolgend anhand der Zeichnung im Prinzip beispielshalber noch näher erläutert. Es zeigen:
- Fig. 1: eine Perspektivdarstellung (schräg von oben) auf eine erfindungsgemäße Vorrichtung, wobei deren Rückseite, an welcher die vereinzelten länglichen Körper abgelegt und gepuffert werden, vorne liegt;
- Fig. 2: eine andere Perspektivansicht (von schräg oben) auf die Vereinzelungsvorrichtung gemäß Fig. 1;
- Fig. 3: eine vergrößerte Prinzipdarstellung eines Abschnitts einer erfindungsgemäßen Vereinzelungsvorrichtung mit Sensoreinrichtung und erster Greifeinrichtung in abgehobener Ausgangsstellung;
- Fig. 4: eine Prinzipdarstellung entsprechend Fig. 3, in der die erste Greifeinrichtung einen oben liegenden Körper erfaßt und bereits etwas angehoben hat;
- Fig. 5A, 5B, 5C und 5D: in schematischer Darstellung einer Einzelheit jeweils denselben Ausschnitt aus der erfindungsgemäßen Vereinzelungsvorrichtung, wobei verschiedene Schritte in Verbindung mit der Vereinzelung eines länglichen Körpers aus einem Bündel solcher Körper dargestellt sind;
- Fig. 6: in einer etwas vergrößerten Prinzip-Detaildarstellung einen Ausschnitt aus einer erfindungsgemäßen Vereinzelungsvorrichtung, und zwar in deren Ausgangsstellung vor Beginn des Vereinzelungsverfahrens, sowie
- Fig.7: eine wiederum prinzipielle Perspektivdarstellung eines Ausschnitts einer erfindungsgemäßen Vereinzelungsvorrichtung, wobei der zu ergreifende Körper von den Greifeinrichtungen bereits vereinzelt und zum Ablegen angehoben wurde.

In den Figuren ist eine erfindungsgemäße Vereinzelungsvorrichtung 1 dargestellt, die im wesentlichen ein Portal 2, eine Zuführeinrichtung 3 sowie eine Abführeinrichtung 4, die auch noch als Ausrichteinrichtung dient, umfaßt.

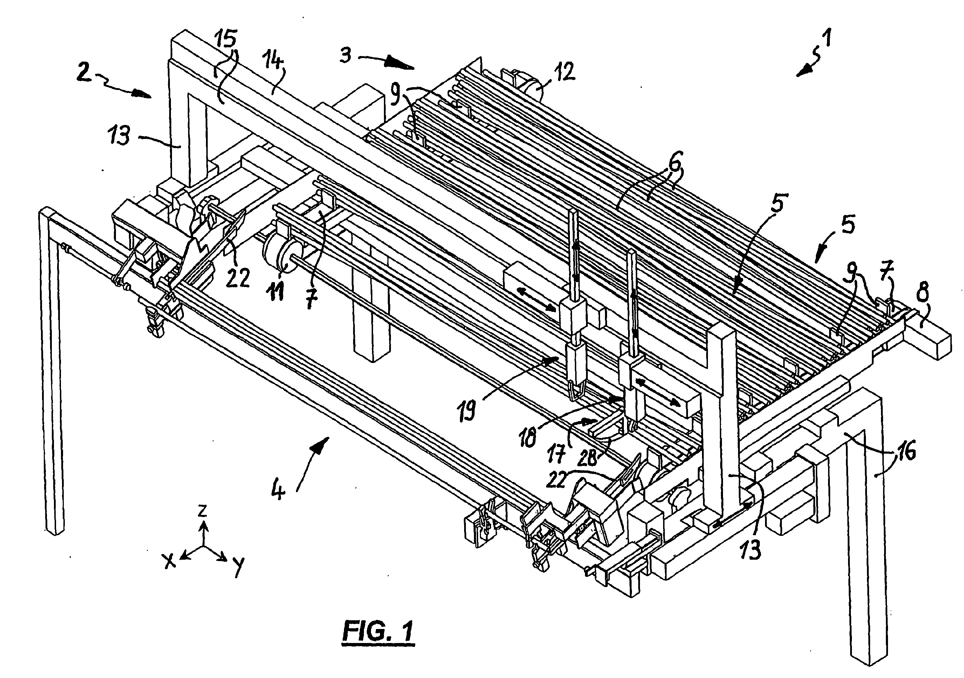

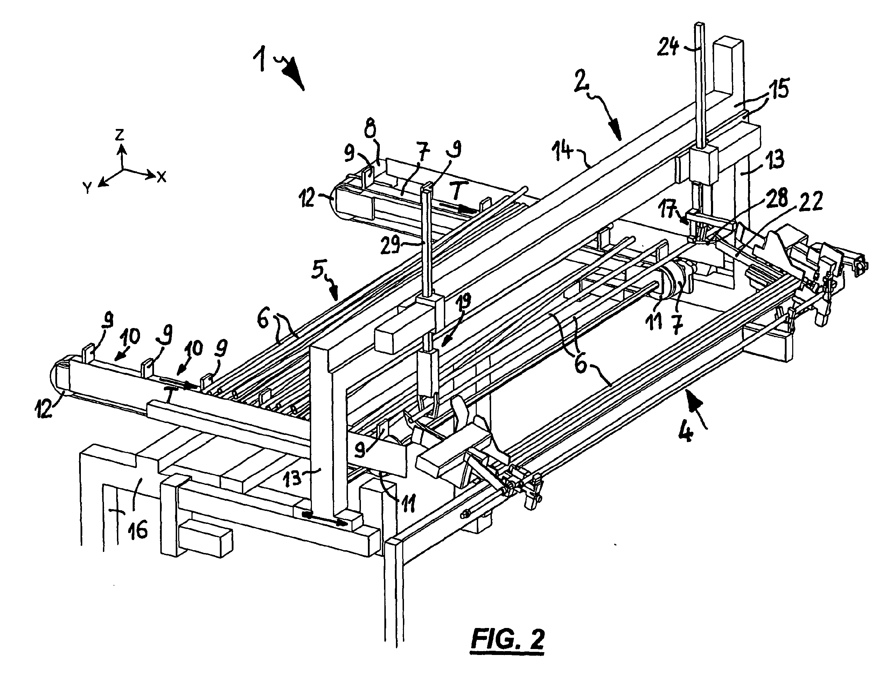

Auf der Zuführeinrichtung 3 befinden sich, wie aus den Fig. 1 und 2 gut erkennbar ist, mehrere Bündel 5 von schlanken, stangenförmigen und wirr angeordneten Körpern 6, die mittels dieser Vereinzelungsvorrichtung 1 entwirrt und separiert sowie abgelegt werden sollen.

Die Zuführeinrichtung 3 weist zwei oder auch mehrere Transportbänder 7 auf und läßt sich aus der Darstellung der Fig. 2 besonders gut erkennen, weil dort - anders als in Fig. 1 - nur in dem in Transportrichtung T der Transportbänder 7 gesehen vorderen Bereich derselben einige Bündel 5 schlanker Körper 6 gezeigt sind, während (zur besseren Darstellung) im hinteren Bereich der Transportbänder 7 keine länglichen Körper 6 eingezeichnet sind.

Die Transportbänder 7 werden über einen Antrieb 8 getaktet bewegt, wobei auf ihnen, in ihrer Längsrichtung gesehen, in gleichmäßigen Abständen zueinander versetzt plattenartige Elemente 9 angebracht sind, deren jedes senkrecht quer zur Längsrichtung des betreffenden Transportbandes 7 liegt und sich über dessen ganze Breite hinweg erstreckt.

Die plattenartigen Elemente 9 stellen eine Art Trennwände dar, wobei zwischen zwei aufeinander folgenden plattenartigen Elementen 9 jeweils ein segmentartiger Aufnahmeraum 10 geschaffen ist, in dem die seitlichen Endabschnitte jeweils eines Bündels 5 von länglichen Körpern 6 liegen.

Die plattenartigen Elemente 9, die im wesentlichen senkrecht von der Oberfläche des betreffenden Transportbandes 7 nach oben, senkrecht zur Transportrichtung *T,* vorstehen, laufen mit den endlos geführten Transportbändern 7 um, d.h. am transportseitigen Ende des betreffenden Transportbandes 7 schwenken sie mit diesem jeweils um die dortige Umlenkrollen 11 herum nach unten, laufen mit dem Transportband 7 auf der Unterseite wieder entgegen der Transportrichtung ***T*** zurück und schwingen schließlich über die dortigen Umlenkrollen 12 nach oben, um wieder einen Aufnahmeraum 10 für ein neu aufzunehmendes Bündel 5 schlanker Körper 6 zu bilden.

Die Transportbänder 7 sind in der Gesamtvorrichtung so angebracht, daß mindestens eines der beiden Transportbänder 7 (einschließlich seinem zugehörigen Antrieb und der entsprechenden Lagerung) senkrecht quer zur Transportrichtung ***T*** (also in Richtung ***Y*** des in Fig. 1 dargestellten Koordinatensystems) verstellt werden kann, um die Vereinzelungsvorrichtung 1 für unterschiedliche Längen der Körper 6 einsetzen zu können.

Das Portal 2 besteht, wie die Figuren zeigen, im wesentlichen an seinen beiden Endseiten aus jeweils einer senkrecht nach oben ragenden Säule 13 und einem die oberen Enden der beiden seitlichen Säulen 13 miteinander verbindenden, quer zur Transportrichtung ***T*** verlaufenden Querträger 14, an dem eine sich über seine Länge erstreckende Portalführung 15 angebracht ist (vgl. Fig. 1 und 2).

Das Portal 2 kann in Richtung ***X*** längs des Grundgestelles 16 der Vereinzelungsvorrichtung 1 bewegt werden, was in den Fig. 1 und 2 nur rein prinzipiell durch im Fußbereich der seitlichen Säulen 13 eingezeichnete Pfeildarstellungen angedeutet wird.

Am Portal 2 sind ferner verschiedene Funktionseinheiten, jeweils längs der Portalführung 15 in Richtung ***Y*** verfahrbar, angebracht, bei denen es sich um eine Sensoreinrichtung 17, eine erste Greifeinrichtung 18 (unmittelbar neben der Sensoreinrichtung 17) und eine weitere (zweite) Greifeinrichtung 19 handelt.

In der in den Figuren dargestellten Ausführungsform können die Sensoreinrichtung 17 und die erste Greifeinrichtung 18 gemeinsam in Richtung ***Z*** verfahren werden (wiederum durch Pfeildarstellungen in Fig. 1 angedeutet).

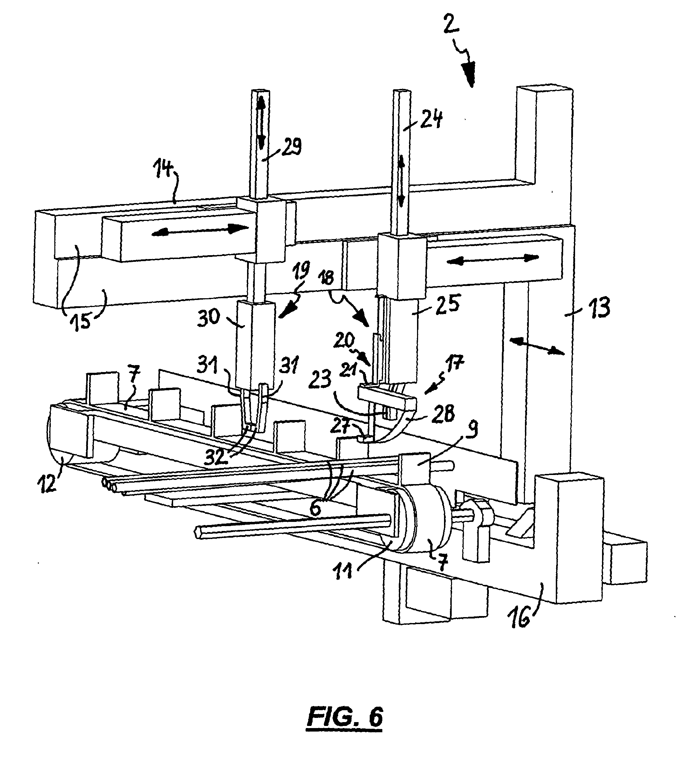

Dabei wird die Sensoreinrichtung 17 (vgl. Fig. 6) über ein mit der ersten Greifeinrichtung 18 verbundenes Haltegestell 20 von letzterer getragen und ist mit dieser, vertikal (in Richtung ***Z***) relativ zu dieser verschieblich, in dem Haltegestell 20 gelagert.

Diese Lagerung ist so ausgeführt, daß sie einen die Bewegung der Sensoreinrichtung 17 relativ zur ersten Greifeinrichtung 18 vertikal nach unten begrenzenden Anschlag (nicht dargestellt) ausbildet.

Gegenüber der ersten Greifeinheit 18 kann die Sensoreinrichtung 17 frei längs einer Führung in vertikaler (Z-)Richtung verschoben werden.

Durch diese Anordnung von Sensoreinrichtung 17 und erster Greifeinrichtung 18 ist eine unmittelbar seitlich (in Richtung ***Y*** gesehen) nebeneinander liegende Anordnung der beiden Funktionselemente 17 und 18 erreicht, was die Folge hat, daß bei Erkennen eines in einem Bündel 5 oben liegenden Körpers 6 durch die Sensoreinrichtung 17 der anschließende Vorgang des Erfassens dieses Körpers 6 durch die erste Greifeinrichtung 18 in unmittelbar seitlicher Nähe des Bereiches, in welchem die Detektion stattfand, vorgenommen werden kann.

Wie die Figuren 1, 2 sowie 5A, 5B, 5C, 5D, 6 und 7 erkennen lassen, ist am Querträger 14 des Portales 2 auch noch eine weitere, zweite Greifeinrichtung 19 angebracht, wobei die Anordnung der Funktionselemente 17, 18 und 19 so gewählt ist, daß die vertikalen Mittelachsen dieser drei Funktionseinheiten in einer gemeinsamen, senkrecht zur Transportrichtung ***T*** quer verlaufenden, Vertikalebene liegen. Auch die weitere (zweite) Greifeinheit 19 kann in den Richtungen ***Y*** sowie ***Z*** bewegt werden.

Die Abführeinrichtung 4 bildet, wie den Figuren 1 und 2 entnehmbar, durch zwei am in Transportrichtung ***T*** hinteren Ende der Vereinzelungsvorrichtung 1 parallel zueinander und in Transportrichtung ***T*** unter gleichem Winkel nach unten geneigte Gestellstege 22 eine schiefe Ebene aus, auf welche die von den Greifeinrichtungen 18 und 19 vereinzelten Körper 6 mit ihren seitlichen Endbereichen durch Verfahren des Portales 2 abgesetzt werden können. Infolge der Neigung der Gestellstege 22 rollt dann ein abgesetzter länglicher Körper 6 in Richtung zum unteren Ende der Gestellstege 22, so daß dort die vereinzelten und abgesetzten länglichen Körper 6 sich in der in den Fig. 1 oder 2 gezeigten Weise hintereinander liegend puffern lassen. Dabei werden sie gegen einen (nicht dargestellten) Endanschlag ausgerichtet, von wo aus sie einer nachgeschalteten Bearbeitungsmaschine, etwa einer Rohrbiegemaschine, in geeigneter Weise zugeführt werden können. So könnte z.B. eine solche (in den Figuren nicht dargestellte) Rohrbiegemaschine ihrerseits mit geeigneten Einrichtungen versehen sein, welche den länglichen Körper 6 aus der Ausricht- und Abführeinheit 24 entnehmen.

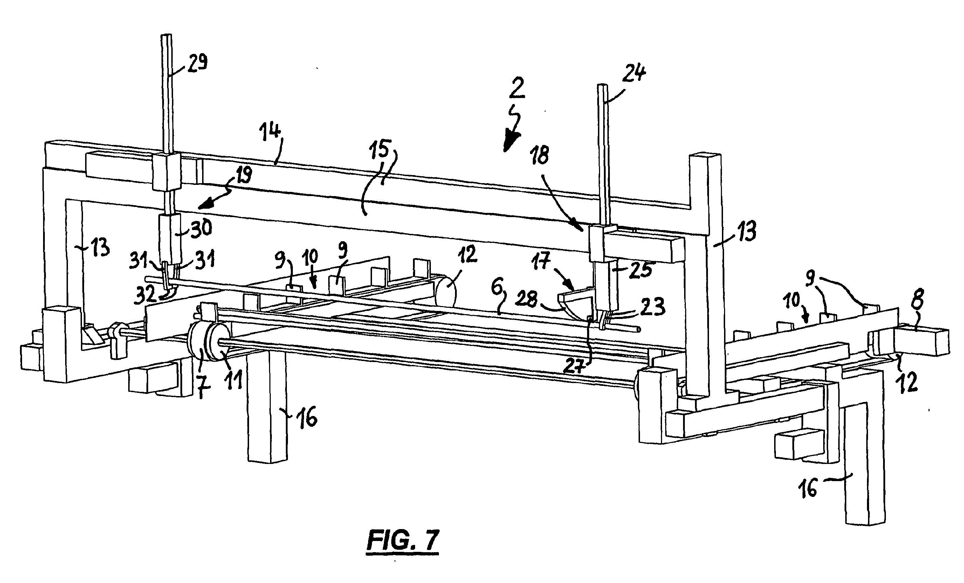

Die Fig. 6 und 7 zeigen vergrößerte Detailausschnitte aus einer Vereinzelungsvorrichtung 1 zur klareren Darstellung und Zuordnung der einzelnen Funktionseinheiten 17, 18 und 19 zueinander.

Die erste Greifeinheit 18 ist, wie Fig. 7 gut zeigt, mit zwei Greifbacken 23 und mit einer vertikal ausgerichteten Führungsachse 24 (in Form einer Zahnstange) ausgestattet, die an einen (nicht gezeigten) programmgesteuerten Antrieb angeschlossen ist und mittels derer die erste Greifeinrichtung 18 in Vertikalrichtung (Z) verfahren werden kann. Die erste Greifeinrichtung 18 umfaßt dabei ein Gehäuse 25, an dessen unterem Ende die beiden Greifbacken 23 und an dessen oberen Ende die vertikale Führungsachse 24 überstehen.

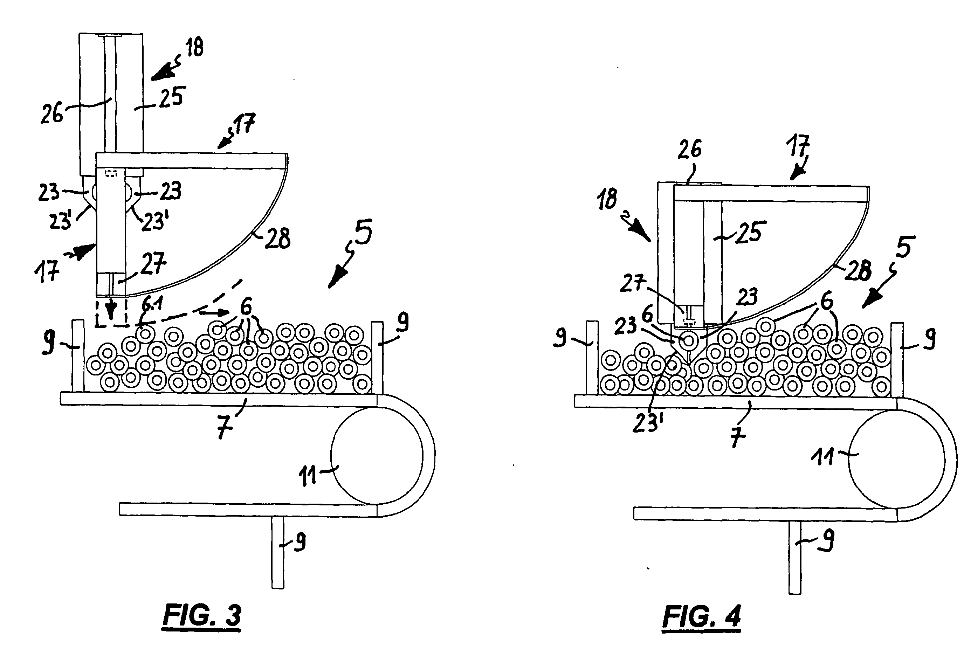

Wie schon weiter oben erwähnt, ist an dem Gehäuse 25 die Sensoreinheit 17 vertikal beweglich gelagert, indem sie über den Halteflansch 21 an dem Haltegestell 20 befestigt ist und letzteres in einer vertikalen Führungsnut 26 im Gehäuse 25 frei verschieblich geführt sitzt (vgl. hierzu auch die Prinzipdarstellungen der Figuren 3 und 4).

Die Sensoreinheit 17 besteht aus einem Sensor 27 zum Identifizieren eines oben in einem Bündel 5 liegenden schlanken Körpers 6 und aus einem in Transportrichtung ***T*** diesem vorgeschalteten bogenförmigen Führungsblech 28, das sich gekrümmt, bevorzugt kreisbogenförmig, vom unteren Ende des Sensors 27 aus nach oben erstreckt und beim Verfahren der Sensoreinheit 17 in Transportrichtung ***T*** als ein Leitblech dient.

Wenn das Gehäuse 25 der ersten Greifeinrichtung 18 über die vertikale Führungsachse 24 nach unten ausgefahren wird, kann die Sensoreinrichtung 17, wenn sie während dieser Ausfahrbewegung gegen ein Hindernis, nämlich einen oben liegendenden schlanken Körper 6, stößt, in der Führungsnut 26 nach oben frei verschoben werden.

Wie die Figuren zeigen, sind der Sensor 27 und die Greifbacken 23 sehr nahe nebeneinander (in Richtung ***Y ,*** senkrecht zur Transportrichtung ***T*** gesehen) positioniert.

Die weitere (zweite) Greifeinrichtung 19 ist ebenfalls über eine vertikale Führungsachse 29 (wiederum bevorzugt eine Zahnstange) in Richtung ***Z*** (senkrecht zur Transportrichtung ***T*** sowie zum Querträger 14 der Portalführung 15 gesehen) bewegbar (Fig. 6 und 7). Zusätzlich kann sie aber auch noch in Richtung ***Y*** (entlang der Portalführung 15 des Querträgers 14) in Längsrichtung des aufzunehmenden schlanken Körpers 6 verfahren werden.

Die weitere Greifeinrichtung 19 umfaßt ein Gehäuse 30, an dessen Oberseite eine vertikale Führungsachse 29 nach oben und an dessen Unterseite zwei verschwenkbare Arme 31 nach unten vorstehen, die an ihren unteren Enden aufeinanderzu gerichtete, in geschlossenem Zustand der Greifeinrichtung 19 mit ihren Endflächen gegeneinander anliegende Führungsstege 32 zum Untergreifen und Abstützen des aufzunehmenden Körpers 6 aufweisen (vgl. insbesondere Fig. 6 und 7).

Die beiden verschwenkbaren Arme 31 können in eine geöffnete, aufgeklappte Position, in der sie den aufzunehmenden Körper 6 erfassen und untergreifen können, sowie in eine geschlossene, zugeklappte Position überführt werden, wobei alle Figuren diese Arme 31 stets in deren geschlossener Position zeigen.

Zusätzlich ist auch noch ein (in den Figuren allerdings nicht dargestellter) Auslenkmechanismus vorgesehen, der bei dem Verfahren der weiteren Greifeinrichtung 19 entlang dem Querträger 14 (also in Richtung ***Y* )** den Vorschub stoppt, wenn dabei eine zu große Axialbelastung (Kraft in Richtung ***Y* )** auf die Arme 31 bzw. deren Führungsstege 32 wirkt, weil sich z. B. der untergriffene Körper 6 nicht leicht aus dem Bündel 5 nach oben heben läßt.

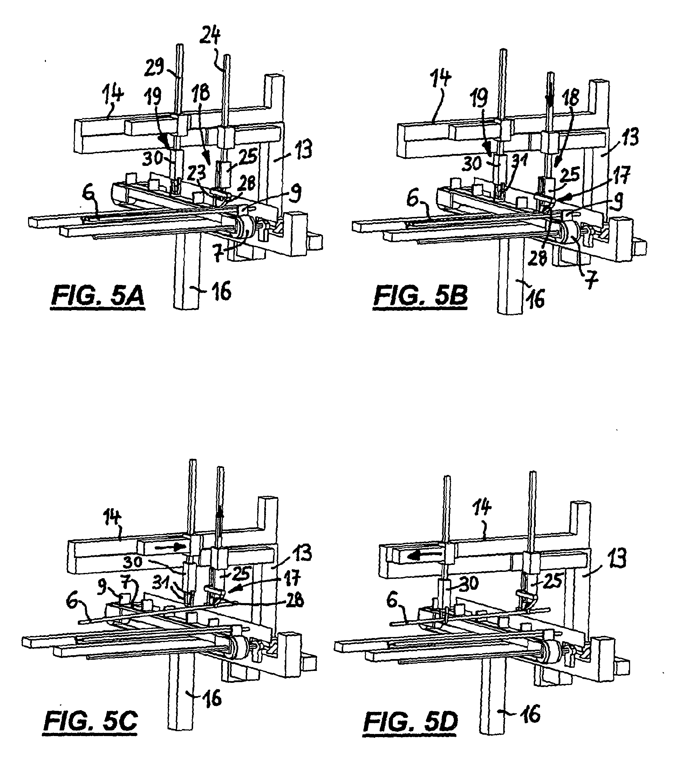

Anhand der Figuren 5 A bis 5 D soll nun die Funktionsweise der erfindungsgemäßen Vereinzelungsvorrichtung 1 noch näher erläutert werden:

Diese Figuren zeigen den Ablauf eines Vereinzelungsvorgangs eines Körpers 6 aus einem Bündel 5.

Zunächst wird, wie Fig. 5 A zeigt, die erste Greifeinrichtung 18 mit der Sensoreinheit 17 über die Vertikalachse 24 soweit abgesenkt, bis die Sensoreinrichtung 17, die mit dem Gehäuse 25 der ersten Greifeinrichtung 18 nach unten mitfährt, mit der Oberseite des Bündels 5 der Körper 6 irgendwie in Eingriff gelangt (Fig. 5 A). Anschließend wird das Portal 2 in Richtung ***X*** (entsprechend der Transportrichtung ***T***) verfahren, wobei das Führungsblech 28 über die Oberseiten der im Bündel 5 oben liegenden Körper 6 läuft, bis die Sensoreinrichtung 17 einen oben liegenden Körper 6 ermittelt, wonach die Bewegung des Portals 2 gestoppt wird.

Dieser Vorgang ist in den Fig. 3 und 4 in ganz prinzipieller Darstellung und in starker Vergrößerung noch einmal im einzelnen gezeigt:

Fig. 3 zeigt die Anfangsstellung, in welcher sich die erste Greifeinrichtung 18 mit ihrem Gehäuse 25 und der daran befestigten Sensoreinrichtung 17 in der Ausgangsstellung oberhalb des darunter liegenden Bündels 5 von länglichen Körpern 6 befindet. Wird nun das Gehäuse 25 der ersten Greifeinrichtung 18 nach unten abgesenkt, gelangt zuerst (bei der Darstellung der Anordnung nach Fig. 3) das Führungsblech 28 der Sensoreinrichtung 17 an einer Stelle wenig vor der Lage des Sensors 27 in Anlage gegen einen dort oben liegenden Körper 6.1, wodurch die Sensoreinrichtung 17 dann in dieser Ruheposition verharrt ( in Fig. 3: gestrichelt eingezeichnet). Anschließend wird das Gehäuse 25 der ersten Greifeinrichtung 18 noch weiter nach unten abgesenkt, so daß die Greifbacken 23 noch oberhalb der plattenartigen Elemente 9, zwischen denen die länglichen Körper 6 gestapelt sind, liegen, wobei jedoch die Sensoreinrichtung 17 über das (in den Fig. 3 und 4 jedoch nicht dargestellte) Haltegestell 20 in der Führungsnut 26 frei nach oben verschoben wird.

In dieser Situation wird sodann durch Verschieben des Portals 2 die Sensoreinrichtung 17 in Richtung des in Fig. 3 gestrichelt eingezeichneten Pfeils auf der Oberseite des Bündels 5 der Körper 6 nach vorne (in Transportrichtung ***T*** ) bewegt, wobei durch das Führungsblech 28 der Sensor 27 bei dieser Vorwärtsbewegung nach oben angehoben wird, falls das Führungsblech 28 gegen einen höher als die Unterseite des Sensor 27 liegenden Oberflächenbereich eines Körpers 6 anläuft.

Der Sensor 27 ist als Näherungssensor ausgebildet und bestimmt laufend, und zwar in Richtung seiner axialen Mittelachse, den Abstand zwischen seiner Unterseite und der Oberfläche eines darunter liegenden Körpers 6 im Bündel 5. Wenn beim Vorwärtsfahren dieser vom Sensor 27 gemessene Abstand gleich einem vorgegebenen Minimalwert (entsprechend einem minimalen Arbeits-Meßabstand des Näherungssensors 27) wird, befindet sich der Sensor 27 mit seiner Mittelachse unmittelbar über einem im Bündel 5 ganz oben liegenden Oberflächenabschnitt eines Körpers 6.

In dieser Position wird anschließend das Gehäuse 25 der ersten Greifeinrichtung 18 um ein vorgegebenes Maß noch etwas weiter abgesenkt, bis die geöffneten Greifbacken 23 unmittelbar neben dem Sensor 27 diesen detektierten, oben liegenden Körper 6 umgreifen können und durch anschließendes Zusammenfahren ergreifen. Hiernach wird das Gehäuse 25 mit seinen Greifern 23 und dem zwischen diesen erfaßten Körper 6 vertikal um eine vorbestimmte Strecke angehoben, die ausreichend groß ist, daß dort der erfaßte Körper 6 mindestens oberhalb der oberen Endflächen der Elemente 9 liegt, so daß er später in dieser Höhe über dem Bündel 5 ungehindert verfahrbar werden kann.

Den Zustand unmittelbar nach erfolgtem Ergreifen des Körpers 6 durch die beiden Greifbacken 23 der ersten Greifeinrichtung 18 zeigt Fig. 5 B, während Fig. 4 einen Zustand kurz danach zeigt, wenn nämlich der ergriffene Körper 6 schon ein wenig angehoben ist.

In Fig. 5 C ist nun der Zustand dargestellt, bei dem die erste Greifeinrichtung 18 danach bis zu der (vorbestimmten) Höhenlage hochgefahren ist, bis zu der dieser Endbereich des ergriffenen Körpers 6 aus dem Bündel 5 nach oben herausgehoben werden soll.

Wenn der Sensor 27 beim Gleiten des Führungsblechs 28 auf der Oberfläche des Bündels 5 einen ganz oben liegenden Körper 6 erreicht und detektiert hat, wird durch eine (in den Figuren ebenfalls nicht gezeigte) Steuereinheit der Gesamtvorrichtung die erste Greifeinrichtung 18 angesteuert und abgesenkt. Bei dieser Absenkbewegung wird die Sensoreinrichtung 17 in der Führungsnut 26 entlang dem Gehäuse 25 nach oben geschoben, bis ein (in den Figuren nicht gezeigter) in seiner Höhenlage verstellbarer Schalter ausgelöst wird, der die Vertikalbewegung des Gehäuses 25 mit den Greifbacken 23 nach unten abstoppt und die Greifbewegung der Greifbacken 23 auslöst. Der Schalter ist so in seiner Höhenlage eingestellt, daß bei seiner Betätigung die Greifbacken 23 so positioniert sind, daß sie den Körper 6 direkt unterhalb des Sensors 27 ergreifen, wie dies auch aus der Darstellung der Fig. 4 ersichtlich ist.

Dabei sind die Greifbacken 23 an ihren voneinander abgewandten Außenseiten jeweils mit einer abgeschrägten Außenkante 23' derart versehen, daß diese Außenkanten 23' in Richtung zum frei vorstehenden Ende der Greifbacken 23 hin (im geschlossenen Zustand derselben) konvergieren, wie dies aus den Darstellungen der Fig. 3 und 4 ersichtlich ist. Durch diese Keilform können bei einer Absenkbewegung benachbarte Körper 6 beiseite geschoben werden (auch wenn die Greifbacken 23 dabei etwas geöffnet sind).

Schon während der Aufwärtsbewegung der ersten Greifeinrichtung 18 zum Anheben des ergriffenen Körpers 6 oder auch erst nach Erreichen der End-Anhebestellung wird die weitere, zweite Greifeinrichtung 19 entlang dem Querträger 14 in Richtung ***Y*** zur Sensoreinrichtung 17 und zur ersten Greifeinrichtung 18 hin gefahren. Dann werden die verschwenkbaren Arme 31 der weiteren Greifeinrichtung 19 geöffnet, das Gehäuse 30 etwas nach unten auf eine vorbestimmte Position gefahren und die Arme 19 geschlossen. Sie untergreifen dabei mit ihren Führungsstegen 32 den angehobenen Körper 6. Fig. 5 C zeigt eine Stellung der weiteren Greifeinrichtung 19 kurz vor Öffnen deren Arme 31 zum Umgreifen und Untergreifen des Körpers 6.

Hiernach wird, wie in Fig. 5 D gezeigt, das Gehäuse 30 der zweiten Greifeinrichtung 19 längs des Querträgers 14 des Portals 2 in Richtung ***Y*** von der ersten Greifeinrichtung 18 weg verfahren und dabei (oder auch erst am Ende der Verfahrstrecke) kontinuierlich soweit angehoben, daß der Körper 6 an der Stelle, an welcher er von den Führungsstegen 32 der Arme 31 untergriffen ist, ebenfalls oberhalb der Elemente 9 liegt, bevorzugt auf derselben Höhenlage wie die Höhenlage, in der er von den Greifbacken 23 der ersten Greifeinrichtung 18 gehalten wird. Während dieser Verfahrbewegung der zweiten Greifeinrichtung 19 (in Richtung ***Y*** ) entlang dem ergriffenen Werkstück 6 wird dieses nach und nach nach oben aus dem Bündel 5 herausgelöst, bis dann die aus Fig. 7 ersichtliche Endstellung bezüglich des Verfahrweges der zweiten Greifeinrichtung 19 erreicht ist. In dieser Stellung wird der nun völlig aus dem Bündel 5 herausgelöste Körper 6 oberhalb des Bündels 5 in einer zum Querträger 14 parallelen Position gehalten und durch weiteres Verfahren des Portals 2 in Transportrichtung ***T*** in eine Lage gebracht, wie sie in Fig. 2 gezeigt ist, in welcher er durch Absenken und Öffnen der beiden Greifeinrichtungen 18 und 19 bzw. deren Greifarme 23 und 31 auf die schiefe Ebene des Haltegestells 20 abgelegt werden kann.

Wenn bei der Verfahrbewegung der zweiten Greifeinrichtung 19 die auf diese über die Abstützstelle derselben mit dem aufgenommenen Körper 6 ausgeübte Kraft (in Richtung ***Y*** ) zu groß, d. h. größer als eine vorgegebene Kraftschwelle, wird, wird die Verfahrbewegung über einen (nicht dargestellten) Auslenkmechanismus gestoppt und es kann dann z.B. eine rücklaufende Bewegung über eine gewisse vorgegebene Wegstrecke hinweg (wieder in Richtung zur ersten Greifeinrichtung 18 hin) durch die Steuereinrichtung ausgelöst werden, die nach Verfahren eines vorgegebenen Rücklaufweges wieder umschaltet und die Verfahrbewegung erneut in die ursprüngliche Verfahrrichtung umsteuert. Stattdessen oder zusätzlich könnte auch ein Rütteln der ersten und/oder zweiten Greifeinrichtung 18, 19 zum leichteren Vereinzeln des aufgenommenen Werkstücks 6 für eine vorgegebene Zeitdauer eingeleitet werden. Sollte dies alles jedoch erfolglos bleiben, werden durch die Programmsteuerung die Greifbacken 23 und die Arme 31 geöffnet, der ergriffene Körper 5 freigegeben und das Verfahren beginnt von neuem.

Alle genannten Bewegungen der Einzelelemente der Vereinzelungsvorrichtung 1, nämlich des Portals 2, der Sensoreinrichtung 17, der ersten Greifeinrichtung 18 und der weiteren Greifeinrichtung 19 sowie deren Greifbacken 23 bzw. Arme 31, werden über die bereits weiter oben erwähnte zentrale (in den Figuren nicht dargestellte) Steuereinrichtung programmgesteuert, wobei diese Steuereinrichtung jeweils in Abhängigkeit von Länge und Querschnitt der aufzunehmenden stangenförmigen Körper 6 entsprechend programmiert ist. Bei Einsatz der Vereinzelungsvorrichtung 1 zum Vereinzeln anderer (dickerer oder dünnerer, längerer oder kürzerer usw.) Körper 6 wird dann entsprechend die Steuereinrichtung neu programmiert.

Besonders empfehlenswert ist es, wenn an der ersten Greifeinrichtung 18 und der weiteren Greifeinrichtung 19 deren Greifbacken 23 bzw. Arme 31 und Führungsstege 32 jeweils auf ihren dem aufzunehmenden Körper 6 zugewandten Flächenbereichen eine reibmindernde Oberflächenbeschichtung angebracht ist, etwa durch Aufflocken mit einer geeigneten Kunststoffschicht (wie z. B. aus PTFE oder einem ähnlichen Material), um die beim Auftreten von Relativbewegungen zwischen den Greifbacken 23 bzw. den schwenkbaren Armen 31 und deren Führungsstegen 32 einerseits und dem aufgenommenen Körper 6 andererseits auftretenden Reibkräfte und die für das Verfahren erforderlichen Antriebskräfte gering zu halten. Zudem kann durch geeignete solche Schichten, die in den Figuren allerdings nicht dargestellt sind, auch noch verhindert werden, daß beim Entlangfahren der weiteren Greifeinrichtung 19 relativ zum aufgenommenen Körper 6 bzw. bei dessen Verschwenken um seine Aufnahmestelle in der ersten Greifeinrichtung 18 (wenn er durch die zweite Greifeinrichtung 19 bei deren Verfahren angehoben wird) die Gefahr einer Beschädigung an ihm vermieden wird.

Gleichermaßen könnte aber auch auf jedem Führungssteg eine frei auf ihm verdrehbare Rolle (nicht dargestellt) vorgesehen werden, auf welcher sich die Unterseite des ergriffenen Körpers 6 abstützt, wobei beim Verfahren der zweiten Greifeinrichtung 19 in Y-Richtung infolge der drehbaren Rollen die auftretenden Reibkräfte ebenfalls minimiert werden.

## Patentansprüche

1. Verfahren zum Vereinzeln stangenförmiger Körper (6) aus einem Bündel (5) solcher in einer Transportrichtung (T) angelieferter und quer zu dieser liegender Körper (6), bei dem mittels einer Sensoreinrichtung (17) die vertikale Lage eines Detektionsbereiches an der Oberfläche eines im Bündel (5) oben liegenden Abschnitts eines Körpers (6) an einem seitlichen Endbereich desselben festgestellt, sodann an einer dem Detektionsbereich, senkrecht zur Transportrichtung (T) gesehen, seitlich benachbarten Aufnahmestelle der Körper (6) mit einer ersten Greifeinrichtung (18) erfaßt, um eine vorgegebene Strecke vertikal angehoben und hiernach mittels einer weiteren Greifeinrichtung (19) an einer Stelle, die von der Aufnahmestelle (senkrecht zur Transportrichtung (T) gesehen) in Richtung zum anderen Endbereich des Körpers (6) hin um eine vorgegebene Strecke versetzt liegt, untergriffen wird, wonach die weitere Greifeinrichtung (19) entlang dem Körper (6) bis zu dessen anderem Endbereich hin verfahren, dabei der Körper (6) aus dem Bündel (5) herausgehoben und durch die weitere Greifeinrichtung (19) während oder nach deren Verfahren auf eine Höhenlage gebracht wird, die höher als eine vorgegebene Mindesthöhe liegt, wobei die vertikalen Mittelachsen der Sensoreinrichtung (17) und beider Greifeinrichtungen (18, 19) in einer gemeinsamen, senkrecht zur Transportrichtung (T) quer verlaufenden Vertikalebene liegen, und anschließend der aufgenommene Körper (6) von beiden Greifeinrichtungen (18, 19) zu einer Ablagestelle verbracht oder in einer Halteposition zur Abgabe an eine andere Einrichtung gehalten wird.

2. Verfahren nach Anspruch 1, bei dem der Detektionsbereich auf der dem anderen Endbereich zugewandten Seite der Aufnahmestelle liegt.

3. Verfahren nach Anspruch 2, bei dem der Körper (6) von der weiteren Greifeinrichtung (19) unmittelbar neben dem Detektionsbereich untergriffen wird.

4. Verfahren nach einem der Ansprüche 1 bis 3, bei dem der Detektionsbereich unmittelbar neben der Aufnahmestelle vorgesehen ist.

5. Verfahren nach einem der Ansprüche 1 bis 4, bei dem die weitere Greifeinrichtung (19) nach dem Untergreifen des Körpers (6) während ihres Verfahrens zum anderen Endbereich hin kontinuierlich so angehoben wird, daß sie den Körper (6) am Ende des Verfahrweges auf dieselbe Höhenlage wie die erste Greifeinrichtung (18) gebracht hat.

6. Verfahren nach einem der Ansprüche 1 bis 5, bei dem die weitere Greifeinrichtung (19) bei ihrem Verfahren zum anderen Endbereich hin bei Auftreten eines Verfahrwiderstandes, der größer als ein vorgegebener Wert ist, gestoppt, sodann um eine vorbestimmte Strecke in Gegenrichtung zurückgefahren und anschließend erneut wieder in die anfängliche Fahrtrichtung bewegt wird.

7. Verfahren nach Anspruch 6, bei dem während des Zurückfahrens der weiteren Greifeinrichtung (19) und des anschließenden Verfahrens derselben in die anfängliche Fahrtrichtung das Bündel (5) der länglichen Körper (6) einem Rüttelvorgang unterzogen wird.

8. Verfahren nach einem der Ansprüche 1 bis 6, bei dem die Sensoreinrichtung (17) einen Näherungssensor (27) enthält, welcher den Abstand zur Oberfläche eines im Bereich seiner vertikalen Mittelachse unter ihm vorliegenden Oberflächenbereiches eines stangenförmigen Körpers (6) mißt, wobei die Sensoreinrichtung (17) dabei vertikal von oben in Richtung auf das Bündel (5) länglicher Körper (6) abgesenkt wird, bis sie dort zur Anlage kommt, und für den Fall, daß der gemessene Wert des Abstandes größer als ein vorgegebener Mindestabstandswert ist, in Transportrichtung (T) über die Oberfläche des Bündels (5) bis zu einer Stelle bewegt wird, an welcher der gemessene Abstand gleich dem vorgegebenen Mindestabstandswert ist.

9. Verfahren nach einem der Ansprüche 1 bis 6, bei dem das Anheben des stangenförmigen Körpers (6) durch alle Greifeinrichtungen (18, 19) auf eine Höhenlage erfolgt, in welcher der aufgenommene Körper (6) oberhalb des Bündels (5) in Transportrichtung (T) verfahrbar ist.

10. Vorrichtung zum Vereinzeln stangenförmiger Körper (6) aus einem Bündel (5) solcher Körper (6), insbesondere zur Durchführung eines Verfahrens nach Anspruch 1, mit einer Zuführeinrichtung (3) zum Anliefern der Bündel (5) stangenförmiger Körper (6) entlang einer Transportrichtung (T), einer der Zuführeinrichtung (3) zugeordneten Vereinzelungseinrichtung, die ein Portal (2) mit einer senkrecht zur Transportrichtung (T) horizontal verlaufenden Portalführung (15) umfaßt, an der, längs derselben sowie auch vertikal zu ihr verfahrbar, eine erste Greifeinrichtung (18) zum Erfassen eines stangenförmigen Körpers (6), dieser benachbart eine Sensoreinrichtung (17), die zur Abgabe eines vom vertikalen Abstand zwischen ihr und einem unter ihr liegenden Oberflächenabschnitt eines länglichen Körpers (6) abhängigen Sensorsignals eingerichtet ist, sowie eine entlang der Portalführung (15) und senkrecht zu dieser verfahrbare weitere Greifeinrichtung (19) angebracht sind, wobei letztere zum Untergreifen eines unter ihr liegenden länglichen Körpers (6) eingerichtet ist, wobei ferner die Sensoreinrichtung (17) und alle Greifeinrichtungen (18, 19) auch noch in Transportrichtung (T) verfahrbar sind, und ferner noch mit einer mit dem von der Sensoreinrichtung (17) gelieferten Sensorsignal beaufschlagten Steuerungseinrichtung, mittels derer alle Bewegungs- und Betätigungsvorgänge programmsteuerbar sind.

11. Vorrichtung nach Anspruch 10, bei welcher zum Verfahren von Sensoreinrichtung (17) sowie Greifeinrichtungen (18; 19) in Transportrichtung (T) das Portal (2) entsprechend in Transportrichtung (T) verfahrbar ist.

12. Vorrichtung nach Anspruch 10 oder 11, bei der die Zuführeinrichtung (3) an ihren beiden Längsseiten zwei parallel zur Transportrichtung (T) verlaufende Endlos-Transportbänder (7) umfaßt, die an ihren außen liegenden Oberflächen mit senkrecht zu diesen und zur Transportrichtung (T) vorstehenden plattenartigen Elementen (9) versehen sind, welche, in Transportrichtung (T) gesehen, in Abständen voneinander angeordnet sind, wobei zwischen jeweils zwei aufeinanderfolgenden plattenförmigen Elementen (9) ein Aufnahmeraum (10) für die seitlichen Endbereiche an einer Seite der stangenförmigen Körper (6) eines Bündels (5) ausgebildet wird.

13. Vorrichtung nach einem der Ansprüche 10 bis 12, die weiterhin mit einer der Zuführeinrichtung (3) und der Vereinzelungseinrichtung in Transportrichtung (T) nachgeschalteten Abführeinrichtung (4) versehen ist, an welcher der von den Greifeinrichtungen (18, 19) angehobene Körper (6) abgegeben werden kann.

14. Vorrichtung nach Anspruch 13, bei welcher die Abführeinrichtung (4) eine schiefe, in Transportrichtung (T) geneigte Ebene ausbildet, auf der die abgelegten stangenförmigen Körper (6) in Reihe hintereinander, gegen einen Endanschlag anliegend, aufgenommen werden.

15. Vorrichtung nach Anspruch 14, bei der die Abführeinrichtung (4) mit einer Anordnung zum seitlichen Ausrichten der Enden der abgelegten stangenförmigen Körper (6) versehen ist.

16. Vorrichtung nach einem der Ansprüche 13 bis 15, bei welcher der Abführeinrichtung (4) eine Einrichtung zugeordnet ist, mittels derer die in der Abführeinrichtung (4) gepufferten stangenförmigen Körper (6) erfaßbar und aus ihr an eine weiter nachgeschaltete Transport- oder Bearbeitungsstation übergebbar sind.

17. Vorrichtung nach einem der Ansprüche 10 bis 16, bei welcher die Sensoreinrichtung (17) einen Näherungssensor (27) aufweist.

18. Vorrichtung nach einem der Ansprüche 10 bis 17, bei welcher die Sensoreinrichtung (17) mit einer in Transportrichtung (T) konvex gekrümmten, nach oben verlaufenden Führungsrampe (28) versehen ist, mittels derer sie bei einer Bewegung in Transportrichtung (T) stoßfrei auf dem Bündel (5) länglicher Körper (6) unter ihr verfahrbar ist.

19. Vorrichtung nach einem der Ansprüche 10 bis 18, bei der die Sensoreinrichtung (17) an einem Haltegestell (20) der ersten Greifeinrichtung (18) gehaltert und dadurch mit dieser gemeinsam absenkbar ist.

20. Vorrichtung nach Anspruch 19, bei welcher die Sensoreinrichtung (17) in einem vom Haltegestell (20) der ersten Greifeinrichtung (18) senkrecht quer zur Transportrichtung (T) vorstehenden Halteflansch (21) vertikal in einer Führungsnut (26) verschieblich gelagert ist, wobei ein die Bewegung der Sensoreinrichtung (17) vertikal nach unten begrenzender Anschlag vorgesehen ist.

21. Vorrichtung nach Anspruch 20, bei welcher die Sensoreinrichtung (17) seitlich unmittelbar neben der ersten Greifeinrichtung (18) liegt.

22. Vorrichtung nach einem der Ansprüche 10 bis 21, bei welcher die erste Greifeinrichtung (18) zwei Greifbacken (23) zum Erfassen eines stangenförmigen Körpers (6) aufweist.

23. Vorrichtung nach Anspruch 22, bei der beide Greifbacken (23) auf ihren einander abgewandten Seiten mit schrägen Außenflächen (23') versehen sind, die in Richtung nach unten hin konvergieren.

24. Vorrichtung nach einem der Ansprüche 10 bis 23, bei der die weitere Greifeinrichtung (19) zwei verschwenkbare Arme (31) aufweist, die an ihren freien Enden aufeinanderzu gerichtete, in geschlossenem Zustand der weiteren Greifeinrichtung (19) mit ihren Endflächen gegeneinander anliegende Führungsstege (32) zum Untergreifen eines länglichen Körpers (6) aufweist.

25. Vorrichtung nach Anspruch 24, bei der die Führungsstege (32) zumindest in ihrem oberen Flächenbereich mit einer Verschleißschutzschicht versehen sind.

26. Vorrichtung nach einem der Ansprüche 10 bis 25, bei welcher an der Portalführung (15) eine dritte, senkrecht zu dieser und entlang ihr verfahrbare Greifeinrichtung vorgesehen ist, die ebenfalls zum Untergreifen des länglichen Körpers (6) eingerichtet ist.

## Claims

1. A method of separating rod-shaped bodies (6) from a bundle (5) of such bodies (6) supplied in a conveying direction (T) and located transversely to said direction, wherein the vertical position of a detection region on the surface of a portion of a body (6) located at the top of the bundle (5) is determined by a sensor means (17) at a lateral end region of said body (6), then the body (6) is seized by a first gripping means (18) at a pick-up location which is laterally adjacent to the detection region, as viewed perpendicularly to the conveying direction (T), is vertically lifted by a predetermined distance, whereupon a further gripping means (19) engages under said body (6) at a location which is offset from the pick-up location (as viewed perpendicularly to the conveying direction (T)) in the direction of the other end region of the body (6) by a predetermined length, whereupon the further gripping means (19) is moved along the body (6), up to the other end region of the latter, thereby lifting the body (6) out of the bundle (5), and the body (6) is moved to a vertical position by the further gripping means (19), during or after displacement thereof, which vertical position is higher than a predetermined minimum height, with the vertical center lines of the sensor means (17) and of both gripping means (18, 19) being located in a common vertical plane extending transversely, perpendicular to the conveying direction (T), and then the picked-up body (6) is moved to a depositing location by both gripping means (18, 19) or is held in a holding position for transfer to other equipment.

2. Method according to claim 1, wherein the detection region is located on the side of the pickup location facing the other end region.

3. Method according to claim 2, wherein the further gripping means (19) engages under the body (6) immediately next to the detection region.

4. Method according to any one of claims 1 to 3, wherein the detection region is provided immediately next to the pick-up location.

5. Method according to any one of claims 1 to 4, wherein the further gripping means (19), having engaged under the body (6), is continuously raised during its displacement towards the other end region, such that said further gripping means (19), at the end of its path of displacement, has lifted the body (6) up to the same vertical position as the first gripping means (18).

6. Method according to any one of claims 1 to 5, wherein the further gripping means (19) is stopped during its displacement towards the other end region as soon as there is a resistance to such displacement that is greater than a predetermined value; then said further gripping means (19) is moved back a predetermined distance in the opposite direction, and is then moved again in the initial direction of displacement.

7. Method according to claim 6, wherein the bundle (5) of elongated bodies (6) is subjected to a shaking operation, as the further gripping means (19) is returned and subsequently moved in the initial direction of movement.

8. Method according to any one of claims 1 to 6, wherein the sensor means (17) contains a proximity sensor (27) which measures the distance from the surface of a rod-shaped body (6) present below said sensor (27), in the region of the sensor's vertical center line, in which case the sensor means (17) is lowered vertically from above towards the bundle (5) of elongated bodies (6) until it abuts there, and in case the measured value of the distance is greater than a predetermined minimum distance value, the sensor means (17) is moved over the surface of the bundle (5) in the conveying direction (T) up to a location at which the measured distance equals the predetermined minimum distance value.

9. Method according to any one of claims 1 to 6, wherein lifting of the rod-shaped body (6) is effected by all gripping means (18, 19) up to a vertical position at which the picked-up body (6) is displaceable above the bundle (5) in the conveying direction (T).

10. An apparatus for separating rod-shaped bodies (6) from a bundle (5) of such bodies (6), in particular for carrying out a method according to claim 1, said apparatus comprising a feeding means (3) for supplying the bundles (5) of rod-shaped bodies (6) along a conveying direction (T), a separating means associated with the feeding means (3), which separating means comprises a portal (2) including a portal guide (15) that extends horizontally perpendicular to the conveying direction (T), and at which there are arranged, displaceable in the longitudinal direction of as well as vertically to said portal guide (15), a first gripping means (18) for seizing a rod-shaped body (6); a sensor means (17) adjacent to the first gripping means (18), said sensor means (17) being adapted to emit a sensor signal depending on the vertical distance between the sensor means (17) and a surface portion of an elongated body (6) that is located below it; as well as a further gripping means (19), which is displaceable along and perpendicular to the portal guide (15) and is adapted to engage under an elongated body (6) located below the portal guide (15), the sensor means (17) and all gripping means (18, 19) also being further movable in the conveying direction (T), said apparatus further comprising a control means, to which the sensor signal provided by the sensor means (17) is applied and by which all movement and actuation operations are program-controllable.

11. Apparatus according to claim 10, wherein the portal (2) is accordingly displaceable in the conveying direction (T) in order to displace the sensor means (17) as well as gripping means (18; 19) in the conveying direction (T).

12. Apparatus according to claim 10 or 11, wherein the feeding means (3) comprises, at its two longitudinal sides, two continuous conveyor belts (7), which extend parallel to the conveying direction (T) and are provided with plate-shaped elements (9) at their outside surfaces, said plate-shaped elements (9) protruding perpendicularly to said conveyor belts (7) and to the conveying direction (T) and being spaced apart in the conveying direction (T), with a receiving space (10) being formed, between each pair of successive plate-shaped elements (9), for the lateral end regions on one side of the rod-shaped body (6) of a bundle (5).

13. Apparatus according to any one of claims 10 to 12, which is further provided with a discharging means (4), which is arranged following the feeding means (3) and the separating means in the conveying direction (T) and by which the body (6) lifted by the gripping means (18, 19) can be discharged.

14. Apparatus according to claim 13, wherein the discharging means (4) forms an inclined plane, which is inclined in the conveying direction (T) and on which the deposited rod-shaped bodies (6) are received, following each other in a row and abutting against a limit stop.

15. Apparatus according to claim 14, wherein the discharging means (4) is provided with an arrangement for lateral alignment of the ends of the deposited rod-shaped bodies (6).

16. Apparatus according to any one of claims 13 to 15, wherein the discharging means (4) has assigned to it a means by which the rod-shaped bodies (6) buffered in the discharging means (4) can be seized and transferred from it to a further subsequent transport or processing station.

17. Apparatus according to any one of claims 10 to 16, wherein the sensor means (17) comprises a proximity sensor (27).

18. Apparatus according to any one of claims 10 to 17, wherein the sensor means (17) is provided with an upwardly extending guiding ramp (28), which has a convex curvature in the conveying direction (T), said guiding ramp (28) allowing the sensor means (17) to be displaced without impact on the bundle (5) of elongated bodies (6) located below it, when being moved in the conveying direction (T).

19. Apparatus according to any one of claims 10 to 18, wherein the sensor means (17) is held on a holding frame (20) of the first gripping means (18) and can thereby be lowered together with said first gripping means (18).

20. Apparatus according to claim 19, wherein the sensor means (17) is supported, vertically displaceable within a guiding groove (26), by a holding flange (21) which extends from the holding frame (20) of the first gripping means (18) transversely to the conveying direction (T), in a perpendicular direction, there being provided a stop which limits the movement of the sensor means (17) vertically downwards.

21. Apparatus according to claim 20, wherein the sensor means (17) is laterally located immediately next to the first gripping means (18).

22. Apparatus according to any one of claims 10 to 21, wherein the first gripping means (18) comprises two gripping jaws (23) for seizing a rod-shaped body (6).

23. Apparatus according to claim 22, wherein both gripping jaws (23) are provided with inclined external surfaces (23') on their sides facing away from each other, said surfaces converging downwardly.

24. Apparatus according to any one of claims 10 to 23, wherein the further gripping means (19) comprises two rotatable arms (31) whose free ends are provided with guiding webs (32) which are directed towards each other and contact each other by their end faces in the closed state of the further gripping means (19), so as to engage under an elongated body (6).

25. Apparatus according to claim 24, wherein the guiding webs (32) are provided with a wear-protection layer at least in their upper surface region.

26. Apparatus according to any one of claims 10 to 25, wherein the portal guide (15) is provided with a third gripping means, which is displaceable perpendicular to and along said portal guide (15) and is also adapted to engage under the elongated body (6).

## Revendications

1. Procédé de séparation de produits (6) en forme de barres hors d'un paquet (5) de tels produits (6), amenés dans une direction de transport (T) et disposés transversalement à celle-ci, dans lequel, au moyen d'un dispositif de détection (17), la position verticale d'une zone de détection sur la surface d'une zone d'un produit (6), située sur le dessus dans le paquet (5), est détectée au niveau d'une zone d'extrémité latérale dudit produit, puis le produit (6), au niveau d'une zone de contact, adjacente latéralement à la zone de détection, par référence à une orientation perpendiculaire à la direction de transport (T), est saisi par un premier dispositif de préhension (18), est soulevé verticalement sur une distance prédéfinie et est pris ensuite, au moyen d'un dispositif de préhension (19) supplémentaire à un emplacement qui, perpendiculairement à la direction de transport (T), est décalé de la zone de contact vers l'autre zone d'extrémité du produit (6) selon une distance prédéfinie, à la suite de quoi le dispositif de préhension (19) supplémentaire est déplacé par rapport au produit (6) jusqu'à l'autre zone d'extrémité de celui-ci, à cette occasion, le produit (6) est soulevé sur toute sa longueur hors du paquet (5) et est amené par le dispositif de préhension (19) supplémentaire pendant ou après le déplacement de celui-ci dans une position en hauteur qui correspond au moins à une hauteur minimale prédéfinie, les axes médians verticaux du dispositif de détection (17) et des deux dispositifs de préhension (18, 19) étant situés dans un plan vertical commun, orienté dans le sens vertical transversalement à la direction de transport (T), et ensuite le produit (6) maintenu est amené par les deux dispositifs de préhension (18, 19) vers une zone de dépose ou dans une position d'attente en vue d'être transféré vers un autre dispositif.

2. Procédé selon la revendication 1, dans lequel la zone de contact est située sur le côté orienté vers l'autre zone d'extrémité.

3. Procédé selon la revendication 2, dans lequel le dispositif de préhension (19) supplémentaire s'engage en dessous du produit (6) directement à côté de la zone de détection.

4. Procédé selon l'une quelconque des revendications 1 à 3, dans lequel la zone de détection est prévue immédiatement à côté de la zone de contact.

5. Procédé selon l'une quelconque des revendications 1 à 4, dans lequel le dispositif de préhension (19) supplémentaire, après avoir été engagé en dessous du produit (6), est soulevé en continu déjà pendant son déplacement vers l'autre zone d'extrémité, de telle sorte que, à la fin de son déplacement, le produit (6) est déjà amené dans la même position de hauteur que celle dans laquelle il est maintenu par le premier dispositif de préhension (18).

6. Procédé selon l'une quelconque des revendications 1 à 5, dans lequel le dispositif de préhension (19) supplémentaire, pendant son déplacement vers l'autre zone d'extrémité, en présence d'une résistance au déplacement, qui est supérieure à une valeur prédéfinie, est stoppé, puis est ramené sur une distance déterminée dans le sens opposé et est déplacé ensuite à nouveau dans la direction de déplacement initiale.

7. Procédé selon la revendication 6, dans lequel, pendant le mouvement de retour du dispositif de préhension (19) supplémentaire et le déplacement consécutif de celui-ci dans la direction de déplacement initiale, le paquet (5) de produits (6) longs est soumis à un processus de secousses.

8. Procédé selon l'une quelconque des revendications 1 à 6, dans lequel le dispositif de détection (17) comporte un capteur de proximité (27), qui mesure la distance par rapport à la surface d'une zone superficielle, située en dessous du capteur dans la zone de l'axe médian vertical de celui-ci, sur un produit (6) en forme de barre, le dispositif de détection (17) étant abaissé à cette occasion dans le sens vertical depuis le haut vers le paquet (5) de produits (6) longs jusqu'à ce qu'il se produise un contact, et au cas où la valeur de la distance mesurée est supérieure à une valeur minimale prédéfinie, le dispositif de détection (17) est déplacé dans la direction de transport (T) au-dessus de la surface du paquet (5) jusqu'à un emplacement auquel la distance mesurée est égale à la valeur minimale prédéfinie.

9. Procédé selon l'une quelconque des revendications 1 à 6, dans lequel le produit (6) en forme de barre est soulevé par tous les dispositifs de préhension (18, 19) vers une position de hauteur, dans laquelle le produit (6) maintenu peut être déplacé au-dessus du paquet (5) dans la direction de transport (T).

10. Dispositif de séparation de produits (6) en forme de barres hors d'un paquet (5) de tels produits (6), en particulier pour la mise en oeuvre du procédé selon la revendication 1, avec un dispositif d'acheminement (3) pour amener le paquet (5) de produits (6) en forme de barres le long d'une direction de transport (T), avec un dispositif de séparation, qui est associé au dispositif d'acheminement (3) et qui comporte un portique (2) avec un guidage de portique (15), qui est orienté dans le sens horizontal perpendiculairement à la direction de transport (T) et le long duquel et verticalement à celui-ci peut se déplacer un premier dispositif de préhension (18) destiné à saisir un produit (6) en forme de barre, à proximité de celui-ci sont agencés un dispositif de détection (17), qui est conçu pour délivrer un signal fonction de la distance verticale entre ledit dispositif et une zone superficielle d'un produit (6) long, située en dessous dudit dispositif, ainsi qu'un dispositif de préhension (19) supplémentaire apte à se déplacer le long du guidage du portique (15) et perpendiculairement à celui-ci, ledit dispositif de préhension (19) supplémentaire étant destiné à s'engager en dessous d'un produit (6) long, situé en dessous de celui-ci, et en outre le dispositif de détection (17) et tous les dispositifs de préhension (18, 19) étant aptes à se déplacer également encore dans la direction de transport (T), et en outre avec un dispositif de commande, qui reçoit le signal délivré par le dispositif de détection (17) et par lequel tous les processus de mouvement et d'actionnement peuvent être commandés par programme.

11. Dispositif selon la revendication 10, dans lequel, pour déplacer le dispositif de détection (17), ainsi que les dispositifs de préhension (18, 19) dans la direction de transport (T), le portique (2) peut être déplacé de manière correspondante dans la direction de transport (T).

12. Dispositif selon la revendication 10 ou 11, dans lequel le dispositif d'acheminement (3), sur ses deux côtés longitudinaux, comporte deux bandes transporteuses (7) continues, qui sont orientées parallèlement à la direction de transport (T) et dont les surfaces orientées vers l'extérieur sont munies d'éléments (9) en forme de plaques, en saillie perpendiculairement auxdites surfaces et par rapport à la direction de transport (T), lesquels sont disposés à distance les uns des autres par référence à la direction de transport (T), un espace de réception (10) étant réalisé entre deux éléments (9) en forme de plaques successifs pour recevoir les zones d'extrémité latérales sur un côté des produits (6) longs d'un paquet (5).

13. Dispositif selon l'une quelconque des revendications 10 à 12, qui est muni, en outre, d'un dispositif d'évacuation (4) qui, dans la direction de transport (T), est monté en aval du dispositif d'acheminement (3) et du dispositif de séparation et sur lequel peut être déposé le produit (6) soulevé par les dispositifs de préhension (18, 19).

14. Dispositif selon la revendication 13, dans lequel le dispositif d'évacuation (4) forme un plan oblique, incliné dans la direction de transport (T), sur lequel sont reçus les produits (6) en forme de barres, déposés en rang les uns derrière les autres en étant en appui contre une butée finale.

15. Dispositif selon la revendication 14, dans lequel le dispositif d'évacuation (4) est muni d'un système pour l'alignement latéral des extrémités des produits (6) en forme de barres déposés.

16. Dispositif selon l'une quelconque des revendications 13 à 15, dans lequel le dispositif d'évacuation (4) est associé à un dispositif par lequel les produits (6) en forme de barres, mis en attente dans le dispositif d'évacuation (4), peuvent être saisis et peuvent être transférés à partir de là vers un poste de transport ou de transformation monté plus en aval.

17. Dispositif selon l'une quelconque des revendications 10 à 16, dans lequel le dispositif de détection (17) comporte un capteur de proximité (27).

18. Dispositif selon l'une quelconque des revendications 10 à 17, dans lequel le dispositif de détection (17) est muni d'une rampe de guidage (28) à courbure convexe dans la direction de transport (T) et orientée vers le haut, au moyen de laquelle ledit dispositif de détection peut, au moment d'un mouvement dans la direction de transport (T) vers le paquet (5) de produits (6) longs, être déplacé sans choc en dessous dudit paquet.

19. Dispositif selon l'une quelconque des revendications 10 à 18, dans lequel le dispositif de détection (17) est maintenu sur une structure de fixation (20) du premier dispositif de préhension (18) et, de ce fait, peut être abaissé conjointement avec celui-ci.

20. Dispositif selon la revendication 19, dans lequel le dispositif de détection (17) est monté de manière mobile dans le sens vertical dans une rainure de guidage (26) dans une bride de fixation (21) en saillie transversalement à la direction de transport (T) sur la structure de fixation (20) du premier dispositif de préhension (18), une butée étant prévue pour limiter le mouvement du dispositif de détection (17) dans le sens vertical vers le bas.

21. Dispositif selon la revendication 20, dans lequel le dispositif de détection (17) est situé latéralement directement à côté du premier dispositif de préhension (18).

22. Dispositif selon l'une quelconque des revendications 10 à 21, dans lequel le premier dispositif de préhension (18) comporte deux mâchoires de préhension (23) destinées à saisir un produit (6) en forme de barre.

23. Dispositif selon la revendication 22, dans lequel les deux mâchoires de préhension (23) comportent sur leur côtés opposés des faces extérieures (23') inclinées qui convergent l'une vers l'autre vers le bas.

24. Dispositif selon l'une quelconque des revendications 10 à 23, dans lequel le dispositif de préhension (19) supplémentaire comporte deux bras (31) pivotants, qui comportent des branches de guidage (32), qui sont orientées l'une vers l'autre au niveau de leur extrémité libre et qui, à l'état fermé du dispositif de préhension (19) supplémentaire, sont en appui l'une contre l'autre avec leurs extrémités et sont destinées à s'engager en dessous d'un produit (6) long.

25. Dispositif selon la revendication 24, dans lequel les branches de guidage (32), au moins sur leur zone de surface supérieure, sont revêtues d'une couche anti-usure ;

26. Dispositif selon l'une quelconque des revendications 10 à 25, dans lequel sur le guidage du portique (15) est prévu un troisième dispositif de préhension, qui est apte à se déplacer perpendiculairement à ce dernier et le long de ce dernier et qui est également conçu pour s'engager en dessous du produit (6) long.
